# EUROPÄISCHE PATENTANMELDUNG

(11) **EP 2 166 597 A1**
(43) Veröffentlichungstag der Anmeldung: **24.03.2010**
(21) Anmeldenummer: 09011818.3
(22) Anmeldetag: 16.09.2009
(51) Int. Cl.: H01M 2/10

(54) **Akkumulator**

(30) Priorität: 17.09.2008 DE 102008047615
(71) Anmelder: Li-Tec Battery GmbH, 01917 Kamenz (DE)
(72) Erfinder: Gutsch, Andreas, Dr., 59348 Lüdinghausen (DE); Mikus, Holger, Dr., 51570 Windeck (DE); Kaiser, Jörg, Dr. rer.nat, 01917 Kamenz (DE); Schneider, Martin, Dr., 02633 Göda (DE); Eichinger, Günter, Dr., 63674 Altenstadt (DE); Schäfer, Tim, 99762 Niedersachswerfen (DE)
(74) Vertreter: Wallinger, Michael

(57) **Zusammenfassung**

Ein erfindungsgemäßer Akkumulator weist wenigstens eine galvanische Zelle und eine Aufnahmeeinrichtung auf. Die Aufnahmeeinrichtung ist vorgesehen, die galvanischen Zellen des Akkumulators zu halten. Die Aufnahmeeinrichtung weist wenigstens eine Schutzwandung auf. Diese ist vorgesehen, Energie durch elastische und/oder plastische Verformung aufzunehmen. Die Schutzwandung umgibt die wenigstens eine, von der Aufnahmeeinrichtung gehaltene, galvanische Zelle wenigstens teilweise. Die Dicke der Schutzwandung ist wenigstens teilweise geringer als 1/10 der charakteristischen Kantenlänge der wenigstens gehaltenen einen galvanischen Zelle.

## Beschreibung

Die Erfindung bezieht sich auf einen Akkumulator. Die Erfindung wird im Zusammenhang mit Lithium-Ionen-Akkumulatoren zur Versorgung von KFZ-Antrieben beschrieben. Es wird darauf hingewiesen, dass die Erfindung auch unabhängig von der Bauart des Akkumulators oder unabhängig von der Art des versorgten Antriebs Anwendung finden kann.

Aus dem Stand der Technik sind Akkumulatoren zur Versorgung von KFZ-Antrieben bekannt. Einigen Bauarten dieser Akkumulatoren ist gemein, dass deren galvanische Zellen nur unzureichend gegen Beschädigung geschützt sind.

Der Erfindung liegt daher die Aufgabe zugrunde, einen Akkumulator bzw. dessen galvanische Zellen mit einer geeigneten Schutzeinrichtung vor mechanischer Beschädigung zu bewahren. Dies wird erfindungsgemäß durch die Gegenstände der unabhängigen Ansprüche erreicht. Ein Verfahren zur Herstellung des Akkumulators ist in Anspruch 11 genannt. Vorteilhafte Ausführungsformen und Weiterbildungen sind Gegenstand der Unteransprüche.

Ein erfindungsgemäßer Akkumulator weist wenigstens eine galvanische Zelle und eine Aufnahmeeinrichtung auf. Die Aufnahmeeinrichtung ist vorgesehen, die galvanischen Zellen des Akkumulators zu halten. Die Aufnahmeeinrichtung weist wenigstens eine Schutzwandung auf. Diese ist vorgesehen, Energie durch elastische und/oder plastische Verformung aufzunehmen. Die Schutzwandung umgibt die wenigstens eine von der Aufnahmeeinrichtung gehaltene galvanische Zelle wenigstens teilweise. Die Dicke der Schutzwandung ist wenigstens teilweise geringer als 1/10 der charakteristischen Kantenlänge der wenigstens gehaltenen einen galvanischen Zelle.

Bei dem Akkumulator handelt es sich vorliegend um eine Vorrichtung zur Speicherung von Energie. Die Energie wird in chemischer Form in der wenigstens eine galvanischen Zelle des Akkumulators gespeichert. Zur Versorgung eines elektrischen Antriebs wird zunächst chemische in elektrische Energie gewandelt. Bei einem Ladevorgang des Akkumulators erfolgt die umgekehrte Wandlung von elektrischer in chemische Energie.

Der Akkumulator weist vorliegend wenigstens eine galvanische Zelle auf. Auf den Aufbau einer galvanischen Zelle wird hier nicht näher eingegangen. Zur Erläuterung der Wirkweise der Erfindung wird lediglich darauf hingewiesen, dass diese galvanische Zelle auch einen Elektrolyt enthält. Weiter ist die galvanische Zelle von einer gasdichten Umhüllung umgeben. Diese dient dazu, die galvanische Zelle vor dem Zutritt von Wasser bzw. Wasserdampf zu bewahren. Dabei ist diese Umhüllung wenigstens teilweise als gasdichte Folie ausgebildet, beispielsweise als Metallfolie.

Weiter weist der Akkumulator vorliegend eine Aufnahmeeinrichtung auf. Diese ist auch dazu vorgesehen, die wenigstens eine galvanische Zelle des Akkumulators zu halten. Unter Halten ist zu verstehen, dass die wenigstens eine galvanische Zelle des Akkumulators bei dessen bestimmungsgemäßen Gebrauch im Verbund des Akkumulators und seiner übrigen Bauteile verbleiben.

Die Aufnahmeeinrichtung weist vorliegend wenigstens eine Schutzwandung auf. Es ist Zweck dieser Schutzwandung, die wenigstens eine galvanische Zelle des Akkumulators auch vor mechanischer Beschädigung zu bewahren. So ist die Schutzwandung bzw. deren Material vorgesehen, beispielsweise einwirkende mechanische Energie durch elastische und/oder plastische Verformung aufzunehmen und von der wenigstens einen galvanischen Zelle fern zu halten. Eine elastische Verformung wird nach Aufbrauchen der einwirkenden mechanischen Energie bevorzugt wieder zurückgestellt. Je nach Art und Umfang der mechanischen Energie bzw. Art des Körpers, welcher diese Energie mitführt, reicht eine verfügbare elastische Verformung der Schutzwandung nicht aus. Die Schutzwandung ist eingerichtet, mechanische Energie auch durch plastische Verformung aufzunehmen. So sinkt ein energiereicher oder mit Kraft beaufschlagter Körper ein Stück weit in die Schutzwandung ein und verdrängt deren Material. Das kann auch zum Bruch der Schutzwandung führen. Die derart aufgenommene Energie steht nicht mehr zur weiteren Beschädigung des Akkumulators bzw. dessen galvanischen Zellen zur Verfügung. Auch wird einwirkende mechanische Energie von der Schutzwandung bevorzugt auf eine größere Fläche verteilt.

Kinetische oder potentielle Energie wirkt vorliegend auf den Akkumulator beispielsweise aus einem Stoß bzw. Schlag oder auch aus einer Kraft, welche durch einen beliebigen Körper über einen Zeitraum und/oder einen Weg hinweg auf den Akkumulator oder eine galvanische Zelle wirkt.

Wenigstens teilweise umgibt die Schutzwandung die wenigstens eine galvanische Zelle. Wirtschaftliche Erwägungen zu Materialverbrauch und Herstellungskosten, verfügbaren Bauraum, Bauart des Akkumulators, Zahl bzw. Anordnung ggf. mehrerer galvanischer Zellen, Einsatzort des Akkumulators, Art und Umfang der erwarteten schädigenden Einflüssen und anderen Bedingungen bestimmen, zu welchem Anteil die Schutzwandung die wenigstens eine galvanische Zelle umgibt. Bei einem Akkumulator mit mehreren Begrenzungsflächen kann auch nur eine der Begrenzungsflächen eine Schutzwandung aufweisen.

Die Dicke der Schutzwandung wird in Abhängigkeit der erwarteten Gefährdung, dem Gewicht des Akkumulators oder dem für die Schutzwandung verwendeten Material gewählt. Zur Wahrung einer erwünschten spezifischen volumen- oder massebezogenen Leistung bzw. Energie des Akkumulators wird die Schutzwandung so dünn wie möglich und nur so dick gewählt, wie zur Erfüllung der Schutzwirkung erforderlich ist. Die Dicke der Schutzwandung ist beanspruchungsgemäß gewählt und ist daher nicht unbedingt gleichförmig. Die Dicke der Schutzwandung ist im Verhältnis zur charakteristischen Kantenlänge zu wählen. Vorteilhaft beträgt die Dicke der Schutzwandung wenigstens teilweise weniger als 1/10 der charakteristischen Kantenlänge der von der Aufnahmeeinrichtung gehaltenen wenigstens einen galvanischen Zelle, bevorzugt weniger als 1/25 dieser charakteristischen Kantenlänge. Ersatzweise ist die Dicke der Schutzwandung in mm bemessen. Vorteilhaft beträgt die Dicke der Schutzwandung wenigstens teilweise zwischen etwa 0,01 mm und etwa 100 mm, vorzugsweise zwischen etwa 0,1 mm und etwa 20 mm, besonders bevorzugt zwischen etwa 0,5 mm und etwa 10 mm.

Bei der charakteristischen Kantenlänge einer galvanischen Zelle handelt es sich um eine Vergleichsgröße. Diese wird als arithmetisches Mittel der Kantenlängen der galvanischen Zelle berechnet und berücksichtigt die Geometrie der galvanischen Zelle. Beispielsweise bei einer quaderförmigen galvanischen Zelle werden die drei verschiedenen Kantenlängen des Quaders verwendet. Bei einer zylindrischen oder rotationssymmetrischen Zelle werden deren Länge entlang der Rotationsachse sowie der Radius der Grundfläche verwendet. Bei einer prismatischen Zelle mit beliebiger Grundfläche ist zunächst ein raumgleicher zylindrischer Ersatzkörper zu bestimmen. Dessen kreisförmige Ersatzgrundfläche hat denselben Flächeninhalt wie die Grundfläche des Prismas. Dann werden, wie bei einer zylindrischen Zelle, die Länge entlang der Rotationsachse des Ersatzkörpers sowie der Radius der Ersatzgrundfläche verwendet. Üblicherweise werden mehrere gleichförmige galvanische Zellen zu einem Akkumulator verarbeitet. Ansonsten ist wiederum das arithmetische Mittel der charakteristischen Kantenlängen der verschiedenen galvanischen Zellen zu bestimmen und zu verwenden. Vorliegend wird das derart bestimmte Maß als die "mittlere charakteristische Kantenlänge" verstanden. In diesem Fall tritt die mittlere charakteristische Kantenlänge an die Stelle der charakteristischen Kantenlänge.

Durch die erfindungsgemäße Ausbildung eines Akkumulators bzw. dessen Aufnahmeeinrichtung mit einer Schutzwand können auftretende schädigende mechanische Beanspruchungen von den galvanischen Zellen des Akkumulators fern gehalten werden. So wird der Akkumulator vor Beschädigung bewahrt und die zugrunde liegende Aufgabe gelöst. Weitere Vorteile der Erfindung ergeben sich aus den folgenden Ausführungsformen.

Vorteilhaft umgibt die Schutzwandung die von der Aufnahmeeinrichtung gehaltene wenigstens eine galvanische Zelle wenigstens teilweise formschlüssig. Durch das formschlüssige Umgeben wird erreicht, dass die Freiheitsgrade der Bewegung einer galvanischen Zelle stark eingeschränkt sind. Dabei liegt die Schutzwandung eng an der wenigstens einen galvanischen Zelle an. Sofern der Akkumulator eine Vielzahl galvanischer Zellen aufweist, welche neben und hintereinander berührend angeordnet sind, etwa in der Art von Zeilen und Spalten einer Tabelle, werden die Freiheitsgrade der Bewegung von innen angeordneten galvanischen Zellen durch ihre Nachbarn eingeschränkt. Dabei übt die Schutzwandung bevorzugt elastische Rückstellkräfte auf die formschlüssig umgebenen galvanischen Zellen aus. Vorzugsweise ist die wenigstens eine galvanische Zelle von dieser Schutzwandung wenigstens teilweise umgossen. So wird guter Formschluss zwischen Schutzwandung und der wenigstens einen galvanischen Zelle des Akkumulators erreicht. Das spart Platz, hält die wenigstens eine galvanische Zelle fest in der Aufnahmeeinrichtung und bewahrt den Akkumulator vor Schäden durch Vibrationen. Das wird durch die Wahl eines geeigneten Materials für die Schutzwandung und die Ausbildung der Schutzwandung erreicht. So weist die Schutzwandung vorzugsweise eine hohe innere Reibung auf, welche hilft, einwirkende Energie auch aus Schwingungen zu absorbieren. Die Schutzwandung umgibt die wenigstens eine galvanische Zelle auch zum Schutz vor Feuchtigkeit, Korrosion oder anderen schädigenden Stoffen. Nach einem Versagen einer galvanischen Zelle kann diese der Aufnahmeeinrichtung vorteilhaft entnommen und ersetzt werden.

Vorteilhaft weist eine galvanische Zelle eine gasdichte Umhüllung auf. Das ist insbesondere bei Verwendung eines Elektrolyts mit Lithium-Ionen der Fall. Dabei ist die gasdichte Umhüllung beispielsweise aus einer Metallfolie hergestellt. Durch geeignete Wahl der Wandstärke und des Materials ist die Schutzwandung in der Lage, eine höhere Formänderungsarbeit aufzunehmen, als die gasdichte Umhüllung. Dazu weist die Schutzwandung bevorzugt Streben und/oder Verstärkungsrippen auf. Der Begriff der Formänderungsarbeit ist ebenso wie Verfahren zu deren Berechnung in der Literatur zur technischen Mechanik bestimmt.

Vorteilhaft wirkt die Schutzwandung auch elektrisch isolierend. Sie weist dazu ein erstes Material auf. Sie wirkt elektrisch isolierend bei der Nennspannung des Akkumulators. Besonders bevorzugt wirkt die Schutzwandung auch bei einem Vielfachen der Nennspannung des Akkumulators isolierend. Das wird durch die Wahl eines geeigneten ersten Materials für die Schutzwandung erreicht. Dabei sind zu erwartende elektrische Spannungen zu beachten. Vorzugsweise ist das erste Material bei der 10-fachen Nennspannung des Akkumulators elektrisch nicht leitend, besonders bevorzugt bei der 100-fachen Nennspannung des Akkumulators elektrisch nicht leitend. Vorzugsweise ist die Schutzwandung wenigstens teilweise mit wenigstens einer Deckschicht versehen. Die wenigstens eine Deckschicht ist auf einer Mantelfläche der Schutzwandung angeordnet. Beispielsweise ist eine Deckschicht auf der den galvanischen Zellen des Akkumulators zugewandten Innenfläche der Schutzwandung ausgebildet. Bei Bedarf ist die Außenseite der Schutzwandung mit einer Deckschicht versehen. Vorzugsweise weist die Schutzwandung eine Deckschicht in solchen Bereichen auf, welche besonderen Beanspruchungen ausgesetzt sind, beispielsweise zur Vermeidung von Abrieb. Je nach Wahl der Deckschicht wirkt diese vorzugsweise gegen chemischen und/oder thermischen Angriff. Die Deckschicht wirkt beispielsweise flammhemmend. Eine solche Deckschicht kann bei Brand beispielsweise aufquellen und/oder Schaum erzeugen, verkohlen oder keramisieren. Bevorzugt weist eine Schutzwandung gleichzeitig mehrere verschiedene Deckschichten auf.

Vorteilhaft handelt es sich bei dem ersten Material der Schutzwandung um ein aushärtbares Polymer. Vorzugsweise sind solche Polymere zu wählen, welche sich durch gute Verarbeitbarkeit, geringe Dichte, hohes Energieaufnahmevermögen, hohe elektrische Isolationsfähigkeit auszeichnen. Das erste Material ist bei Bedarf ein Stoffgemisch, je nach Anforderung an die Schutzwandung. Bevorzugt wird zur Anpassung der Stoffeigenschaften an die erwarteten Beanspruchungen der Schutzwandung ein Copolymer als erstes Material gewählt. Das erste Material ist abhängig von den Erfordernissen der Verarbeitung ggf. vorbehandelt. Beispielsweise ist das Polymer einer Gruppe entnommen, welche UP, EP, Polyamide, Polystyrole enthält.

Vorteilhaft weist das erste Material nach dem Aushärten Hohlräume auf. Vorzugsweise sind die Hohlräume gasgefüllt. Die Hohlräume sind von einem Balkenwerk des ersten Materials umgeben. Im Vergleich zum massiven ersten Material weist das Hohlräume aufweisende erste Material höhere Werte hinsichtlich des Flächenträgkeitsmoments, der Biegesteifigkeit, der Dichte, der möglichen Energieaufnahme und/oder der umkehrbaren Verformung bzw. der elastischen Dehnung auf. Vorzugsweise beträgt der Durchmesser eines raumgleichen Ersatzkörpers eines Hohlraums weniger als 1/5 der Dicke der Schutzwandung. Vorteilhaft sind die Hohlräume möglichst gleichmäßig im ersten Material verteilt. So nimmt die Schutzwandung mit einem ausgehärteten ersten Material mit Hohlräumen an Dicke und auch Schutzwirkung zu, ohne dass die spezifische volumen- und massebezogene Leistung bzw. Energie des Akkumulators merklich sinkt. Die Struktur der Schutzwandung ist mit einem eingefrorenen Schaum vergleichbar. Dieser eingefrorene Schaum ist in der Lage, bei geringer Dichte vergleichsweise hohe Biege- oder Stoßbeanspruchungen zu ertragen. Je nach den verwendeten Werkstoffen und den Aushärtebedingungen kann dieser eingefrorene Schaum verschiedene Elastizitätsmodule und zulässige elastische Dehnungen aufweisen. So nimmt die Schutzwandung bei vergleichsweise geringer Masse elastisch oder plastisch Energie durch Formänderung auf. Das ist beispielsweise auch im Zusammenhang mit Schaumstoff oder Metallschäumen bekannt. Bei Bedarf wird dem ersten Material ein Hilfsstoff beigegeben. Dieser Hilfsstoff kann sich bei vorgegebenen Bedingungen ausdehnen, vorzugsweise vor bzw. während des Aushärtens des ersten Materials. Vorteilhaft bewirkt der Hilfsstoff ein verbessertes Aufschäumen des ersten Materials, etwa als Treibmittel, einen verbesserten Zusammenhalt der festen Phase der Schutzwandung, ein besseres Vernetzen der beteiligten Polymere und/oder eine Erhöhung der Langzeitstabilität des ausgehärteten ersten Materials. Der wenigstens eine Hilfsstoff ist bevorzugt geeignet, bei vorgegebenen Bedingungen eine Gasphase zu bilden. Dabei wird die Gasphase vorzugsweise als Folge eines Phasenübergangs des Hilfsstoffs und/oder einer chemischen Reaktion des Hilfsstoffs mit Bildung eines Gases erzeugt. Vorzugsweise bleibt die Gasphase in dem ausgehärteten Material in Hohlräumen eingeschlossen.

Vorteilhaft ist die Schutzwandung leichtgewichtig ausgebildet. Deren Dichte beträgt weniger als 1500 kg/m³, vorzugsweise weniger als 150 kg/m³, besonders bevorzugt weniger als 15 kg/m³, und mehr als 5 kg/m³. So wird eine hohe spezifische volumen- oder massenbezogene Leistung des Akkumulators beibehalten. Dazu sind beispielsweise in der Schutzwandung eingeschlossene Hohlräume dienlich, welche vorzugsweise gasgefüllt sind.

Vorteilhaft weist das erste Material (4) der Schutzwandung (3) weiter wenigstens einen Füllstoff auf. Dieser ist zur wenigstens teilweisen stoffschlüssigen Verbindung mit dem ausgehärteten Polymer des ersten Werkstoffs (4) geeignet.

Dabei umschließt das ausgehärtete Polymer diesen Füllstoff wenigstens teilweise. Dieser Füllstoff wirkt derart, dass mit ihm dieser ausgehärtete erste Werkstoff (4) einen höheren Elastizitätsmodul und/oder eine höhere Zugfestigkeit aufweist. Bevorzugt weist dieser Füllstoff eine Vielzahl von kurzen Stäbchen bzw. Fasern auf, es sind aber auch andere Geometrien möglich. Diese Stäbchen bzw. Fasern liegen im ausgehärteten ersten Material (4) entweder ungeordnet und verteilt oder in Form von Geweben bzw. Gelegen vor. Dabei können mehrere Schichten von Geweben oder Gelegen mit unterschiedlicher Orientierung der Fasern übereinandergelegt werden. Durch die Anwesenheit des Füllstoffs sind die Eigenschaften des ersten Materials (4) verändert. Im Vergleich zum Polymer des ersten Materials (4) weisen die einzelnen Fasern in deren Längsrichtung erhöhte Zugfestigkeit und/oder erhöhten Elastizitätsmodul auf. Bei entsprechender Anordnung der Fasern können dem ausgehärteten ersten Material unterschiedliche Stoffeigenschaften in Bezug auf die Achsen eines kartesischen Koordinatensystems mitgegeben werden. Als Werkstoff für diese Stäbchen bzw. Fasern kommt beispielsweise Glas, Kohlenstoff oder ein Aramid in Frage.

Vorteilhaft weist die Schutzwandung weiter ein zweites Material auf.
Dieses zweite Material zeichnet sich vorzugsweise durch eine höhere Wärmeleitfähigkeit aus, als das erste Material. Beispielsweise weisen die Ansammlungen vorbestimmte Gestalt auf, wie beispielsweise Drahtabschnitte, Folien, Netz, Gewebe, Vliese, rundliche Geometrien wie Perlen, Folien oder Folienstreifen. Solche Ansammlungen liegen in der Schutzwandung bevorzugt gerichtet vor und werden bei der Herstellung der Schutzwandung eingelegt. So kann Wärmeenergie zu- oder abgeführt werden.
Vorzugsweise durchläuft das zweite Material bei vorgegebenen Bedingungen einen Phasendurchgang zur Aufnahme oder Abgabe von Wärmeenergie. Diese vorgegebenen Bedingungen sind in Abhängigkeit von den Betriebszuständen des Akkumulators gewählt. Bevorzugt ist das zweite Material dabei als rundliche und verteilte Ansammlungen ausgebildet. Der Durchmesser eines kugelförmigen Vergleichskörpers mit gleichem Rauminhalt wie eine Ansammlung beträgt weniger als die Hälfte der Dicke der Schutzwandung, vorzugsweise weniger als 1/10 dieser Dicke. Dabei schwankt der Rauminhalt verschiedener Ansammlungen des zweiten Materials innerhalb einer Bandbreite, welche anwendungsbezogen und hinsichtlich der Herstellkosten vorteilhaft ist. Vorzugsweise weist das zweite Material eine höhere Absorptionsfähigkeit hinsichtlich des Elektrolyts auf, als das erste Material. Nach Verletzung der Umhüllung einer galvanischen Zelle wird möglicherweise austretender Elektrolyt insbesondere vom zweiten Material aufgenommen. Die Umgebung wird so vor dem Elektrolyt geschützt.
Vorzugsweise ist das zweite Material als wenigstens einen kanalbildenden Festkörper ausgebildet. Der Kanal dieses Festkörpers kann ein Kühlmittel aufnehmen oder von einem Kühlmittel durchströmt werden. So kann Wärmeenergie zu- oder abgeführt werden. Vorzugsweise wirkt das zweite Material flammhemmend. Das zweite Material kann bei Brand beispielsweise aufquellen und/oder Schaum erzeugen, verkohlen oder keramisieren. Schädliche Wirkung eines Brandes in der Umgebung des Akkumulators kann so zumindest verringert werden.

Bei einer vorteilhaften Ausführungsform weist die Schutzwandung (3) weiter mehrere Füllkörper auf. Die Gestalt eines Füllkörpers ergibt sich im wesentlichen als Folge der Herstellung des Füllkörpers. Die Füllkörper sind nicht zwingend von gleicher Gestalt. Beispielsweise haben die Füllkörper kugelförmige, ellipsoide, tropfenförmige oder eine andere im wesentlichen rotationssymmetrische Gestalt. Der mittlere Durchmesser eines Füllkörpers, der ersatzweise an einer Kugel gleichen Rauminhalts (Ersatzkörper) gemessen wird, liegt zwischen 0,01 bis 5000 Mikrometern, bevorzugt zwischen 0,1 bis 1000 Mikrometern, besonders bevorzugt zwischen 1 bis 400 Mikrometern. Dabei streuen die mittleren Durchmesser der Füllkörper um einen Mittelwert der Durchmesser einer Vielzahl von Füllkörpern. Vorzugsweise sind die Füllkörper überwiegend hohl und/oder weisen geschlossene Oberflächen auf. Die Dichte eines Füllkörpers ist geringer, als die des ausgehärteten ersten Materials. Bevorzugt weisen die Füllkörper wenigstens einen festen Werkstoff auf, beispielsweise Glas oder Kunststoff.

Zur Erzeugung einer Aufnahmeeinrichtung für den erfindungsgemäßen Akkumulator ist eine Form sowie wenigstens ein Material erforderlich. Die wenigstens eine galvanische Zelle des Akkumulators wird in der Form angeordnet. Üblicherweise weist der Akkumulator eine Vielzahl galvanischer Zellen auf, welche in Reihen-/Parallelschaltungen elektrisch verbunden sind. In diesem Fall werden alle galvanischen Zellen des Akkumulators in der Form angeordnet. Die galvanischen Zellen werden in der Form beispielsweise mit Abstandshaltern gegeneinander oder mit Hilfe einer Hilfseinrichtung von außen gegen unbeabsichtigte Verschiebungen gesichert. Es können auch weitere erforderliche Einrichtungen des Akkumulators in der Form angeordnet werden. Als nächstes werden vorgesehene Räume in der Form wenigstens teilweise mit dem die Schutzwand bildenden Material befüllt. Sofern die Schutzwandung weitere Materialien oder Bestandteile aufweisen soll, werden diese in vorgesehene Räume der Form gegeben.

Bei Bedarf verbleiben die galvanischen Zellen und die erzeugte Schutzwandung in der Form. Diese wird dann zum Gehäuse des Akkumulators. In diesem Fall ist die Form hinsichtlich ihres Materials bzw. ihrer Geometrie auch an die Anforderungen aus dem Betrieb des Akkumulators angepasst. In diesem Fall ist die Form beispielsweise ein- oder mehrteilig, aus Metall und/oder Kunststoff mit Einrichtungen zum Anschluss an das Kraftfahrzeug versehen und mit Durchbrüchen zum Zuführen von elektrischen Kabeln und/oder anderen Versorgungsleitungen ausgebildet.

Bei Bedarf wird dem die Schutzwandung bildenden Materials eine weitere Substanz beigemischt, wobei die Mischung gegenüber dem unausgehärteten Material eine veränderte Viskosität aufweist. So wird Einfluss auf die Fließfähigkeit des ersten Werkstoffs während dessen Verarbeitung zur Schutzwandung genommen. Dabei handelt es sich bei dieser weiteren Substanz vorzugsweise um einen pulverförmigen Feststoff, besonders bevorzugt um Aerosil®. Es kann aber als weitere Substanz auch ein anderer Feststoff verwendet werden, sofern die fließfähige Mischung aus dieser weiteren Substanz und dem Material eine andere Viskosität aufweisen soll, als dieses Material.

Weitere Vorteile, Merkmale und Anwendungsmöglichkeiten der vorliegenden Erfindung ergeben sich aus der nachfolgenden Beschreibung in Zusammenhang mit den Figuren. Es zeigt:
- Fig. 1: Eine Schnittansicht durch einen erfindungsgemäßen Akkumulator.
- Fig. 2: Einen vergrößerten Ausschnitt der Schutzwandung 3.

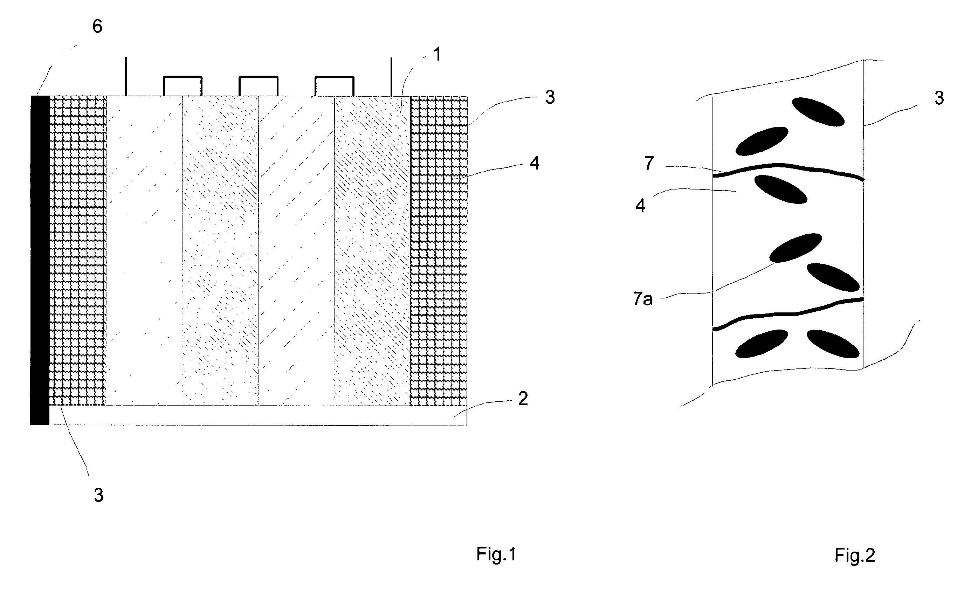

Figur 1 zeigt einen Schnitt durch einen erfindungsgemäßen Akkumulator. Dieser Akkumulator weist vier in Reihe geschaltete galvanische Zellen 1 sowie eine Aufnahmeeinrichtung 2 auf. Die Reihenschaltung der galvanischen Zellen 1 ist durch drei Brücken und zwei Anschlusskontakte am oberen Rand der galvanischen Zellen 1 versinnbildlicht. Die Aufnahmeeinrichtung 2 ist mit einer Schutzwandung 3 ausgestattet. Im Schnitt ist diese Schutzwandung 3 jeweils links und rechts von den galvanischen Zellen 1 dargestellt. Die Dicke der Schutzwandung 3 ist so bemessen, dass sie weniger als ein Zehntel der mittleren charakteristischen Kantenlänge der gehaltenen galvanischen Zellen 1 beträgt. Als erstes Material der Schutzwandung 3 dienen vorgeschäumte und lufthaltige Perlen 4 aus Polystyrol. Mit Hilfe vom heißem Wasserdampf werden die Perlen 4 aufgeschäumt. Dabei dehnt sich die in den Perlen 4 enthaltene Luft aus, die Perlen wachsen zu Kugeln und die nun vorliegenden Kugeln 4 aus Polystyrol verbinden sich untereinander. Das derart aufgeschäumte Polystyrol 4 weist beispielsweise eine Dichte von ca. 70 kg/m³ auf. Der Aufbau der Schutzwandung 3 ist in Fig.1 nur schematisch dargestellt. Tatsächlich bildet das Polystyrol die Wände der Kugeln 4 und deren innere Stege. Die Räume zwischen der Stegen einer Kugel 4 sind luftgefüllt. Der Massenanteil des Polystyrol ist dabei verschwindend gering. Durch die Wahl von Polystyrol als erstem Material 4 ist die Schutzwandung 3 bezüglich der Nennspannung des Akkumulators, hier ca. 12 V, elektrisch nicht leitend. Die geringe Dichte der Schutzwandung 3 bewirkt, dass sich die spezifische volumen- oder massenbezogene Leistung bzw. Energie des Akkumulators nicht bedeutsam verringert.

Die Schutzwandung wird unter Verwendung von vorgeschäumten lufthaltigen Perlen 4 aus Polystyrol sowie einer Form erzeugt. Zunächst werden die galvanischen Zellen 1 des Akkumulators in der Form angeordnet und gegen unerwünschte Bewegungen gegeneinander festgeklemmt. Als nächstes werden die Perlen 4 in vorgesehene Räume innerhalb der Form gegeben. In einem folgenden Schritt wird die Form samt Inhalt den Bedingungen zum Schäumen der Perlen ausgesetzt. Die Perlen 4 werden dabei heißem Wasserdampf ausgesetzt. Die Perlen 4 schäumen auf und füllen die vorgesehenen Räume zur Fixierung der galvanischen Zellen 1. Dabei werden die galvanischen Zellen 1 soweit umschäumt, dass nur noch deren elektrischen Kontaktflächen aus der Schutzwandung 3 herausragen. In einem weiteren Schritt kann der Akkumulator der Form entnommen werden und die Form wiederverwendet werden. Einzelne galvanische Zellen 1 können nach deren Versagen der Aufnahmeeinrichtung 2 entnommen und ersetzt werden.

Bei diesem Ausführungsbeispiel bildet die Form auch das Gehäuse des Akkumulators. Das Gehäuse ist mit entsprechenden Anschlussmöglichkeiten und Durchbrüchen versehen und auch hinsichtlich seiner Gestalt zum Einbau in das Kraftfahrzeug eingerichtet. Das Gehäuse bietet auch zusätzlichen Schutz des Akkumulators. Das Gehäuse ist aus Stahlblech gekantet und verschweißt, kann aber auch aus ganz/teilweise aus Kunststoff bzw. mit anderen Fertigungsverfahren hergestellt sein.

Ersatzweise wird vorgesehene die Form zuerst mit einem ersten Material 4 gefüllt. Die galvanischen Zellen 1 werden mit einer Halterung, ein Fertigungshilfsmittel, verbunden, welche die galvanischen Zellen 1 gegeneinander unverrückbar hält. Anschließend werden die galvanischen Zellen 1 in das erste Material 4 getaucht. Die Halterung wird mit der Form verbunden. Nun erfolgt das Aufschäumen sowie Aushärten des ersten Materials 4. Danach sind die galvanischen Zellen 1 nicht vollständig von der Schutzwandung 3 umgeben.

Figur 2 zeigt einen vergrößerten Ausschnitt der Schutzwandung 3 als eine weitere Ausführungsform. Die Schutzwandung 3 weist als erstes Material ein schäumbares Polymer 4 und ein hochwärmeleitfähiges zweites Material 7 auf. Das zweite Material 7 weist eine deutlich höhere Wärmeleitfähigkeit als das erste Material 4 auf und ist als längliche, unregelmäßige Streifen ausgebildet. Mit dieser Ausbildung trägt das zweite Material 7 dazu bei, Wärmeenergie aus einer die Schutzwandung 3 berührenden galvanischen Zelle 1 abzuleiten.

Ein anderes zweites Material 7a durchläuft bei vorgegebenen Bedingungen einen Phasenübergang. Bei der vorbestimmten Temperatur des Akkumulators ist dieses zweite Material 7a fest. Das zweite Material 7a ist so gewählt, dass dessen Schmelztemperatur nur wenig oberhalb der vorbestimmten Betriebstemperatur des Akkumulators liegt. Sofern die Temperatur einer berührenden galvanischen Zelle 1 die Schmelztemperatur des zweiten Materials 7a übersteigt, so durchläuft dieses teilweise einen Phasenübergang und wird flüssig. Bis zur vollständigen Umwandlung zur Flüssigkeit behält diese Ansammlung des zweiten Materials 7a die Schmelztemperatur bei. Dabei nimmt die Ansammlung des zweiten Materials 7a Wärmeenergie auf und trägt so zur Kühlung einer berührenden galvanischen Zelle 1 bei.

## Patentansprüche

1. Akkumulator mit wenigstens einer galvanischen Zelle (1) und einer Aufnahmeeinrichtung (2), welche zum Halten galvanischer Zellen (1) vorgesehen ist,
**dadurch gekennzeichnet, dass**
die Aufnahmeeinrichtung (2) wenigstens eine Schutzwandung (3) aufweist, welche zur Aufnahme von Energie mittels elastischer und/oder plastischer Verformung vorgesehen ist,
dass die Schutzwandung (3) die wenigstens eine, von der Aufnahmeeinrichtung (2) gehaltene, galvanische Zelle (1) wenigstens teilweise umgibt,
und dass die Dicke der Schutzwandung (3) wenigstens teilweise geringer als 1/10 der charakteristischen Kantenlänge der wenigstens einen von der Aufnahmeeinrichtung (2) gehaltenen galvanischen Zelle (1) beträgt.

2. Akkumulator gemäß Anspruch 1, **dadurch gekennzeichnet, dass**
die Schutzwandung (3) die von der Aufnahmeeinrichtung (2) gehaltene wenigstens eine galvanische Zelle (1) wenigstens teilweise formschlüssig umgibt.

3. Akkumulator gemäß einem der vorherigen Ansprüche, **dadurch**
**gekennzeichnet, dass**
die wenigstens eine galvanische Zelle (1) eine gasdichte Umhüllung aufweist,
und dass die Schutzwandung (3) vorgesehen ist, eine höhere Formänderungsarbeit aufzunehmen, als die gasdichte Umhüllung.

4. Akkumulator gemäß einem der vorherigen Ansprüche, **dadurch gekennzeichnet, dass**
die Schutzwandung (3) wenigstens ein erstes Material (4) aufweist, welches bei einer elektrischen Spannung in Höhe der Nennspannung des Akkumulators elektrisch nicht leitend ist,
und/oder dass die Schutzwandung (3) wenigstens teilweise eine Deckschicht (6) aufweist.

5. Akkumulator gemäß Anspruch 4, **dadurch gekennzeichnet, dass**
das erste Material (4) wenigstens ein aushärtbares Polymer aufweist.

6. Akkumulator gemäß einem der Ansprüche 4 oder 5, **dadurch gekennzeichnet, dass**
das erste Material (4) geeignet ist, unter Ausbildung von Hohlräumen auszuhärten.

7. Akkumulator gemäß einem der vorherigen Ansprüche, **dadurch gekennzeichnet, dass**
die Dichte der Schutzwandung (3) weniger als 1500 kg/m³ beträgt, vorzugsweise weniger als 150 kg/m³ beträgt, besonders bevorzugt weniger als 15 kg/m³ beträgt und mehr als 5 kg/m³ beträgt.

8. Akkumulator gemäß einem der Ansprüche 4 bis 7, **dadurch gekennzeichnet, dass**
das erste Material (4) der Schutzwandung (3) weiter wenigstens einen Füllstoff aufweist, welcher zur wenigstens teilweise stoffschlüssigen Verbindung mit dem ausgehärteten Polymer des ersten Werkstoffs (4) geeignet ist,
dass das ausgehärtete Polymer diesen Füllstoff wenigstens teilweise umschließt,
und dass dieser ausgehärtete erste Werkstoff (4) mit diesem Füllstoff einen höheren Elastizitätsmodul und/oder eine höhere Zugfestigkeit aufweist als ohne diesen Füllstoff.

9. Akkumulator gemäß einem der Ansprüche 4 bis 8, **dadurch gekennzeichnet, dass**
die Schutzwandung (3) weiter ein zweites Material (7) aufweist, welches eine höhere Wärmeleitfähigkeit aufweist, als das erste Material (4),
welches geeignet ist, bei vorgegebenen Bedingungen wenigstens teilweise einen Phasenübergang zu durchlaufen,
welches eine höhere Absorptionsfähigkeit hinsichtlich des Elektrolyts der galvanischen Zelle aufweist, als das erste Material (4), und/oder
welches wenigstens einen Kanal bildet, der durchströmbar ist.

10. Akkumulator gemäß einem der Ansprüche 4 bis 9, **dadurch gekennzeichnet, dass**
die Schutzwandung (3) weiter Füllkörper von geringerer Dichte als das erste Material (4) aufweist.

11. Verfahren zur Erzeugung eines Akkumulators gemäß einem der vorherigen Ansprüche, welches wenigstens die folgenden Verfahrensschritte aufweist:
a) Anordnen der wenigstens einen galvanischen Zelle (1) in einer Form, welche der Gestalt des Akkumulators entspricht,
b) wenigstens teilweises Befüllen der Form mit dem Material, welches die Schutzwandung (3) bildet.

12. Verfahren gemäß Anspruch 11, wobei dem Material für den Verfahrensschritt b) wenigstens eine weitere Substanz zur Beeinflussung der Viskosität des unausgehärteten Materials beigegeben wird, welches die Schutzwandung (3) bildet.
